(19) Europäisches Patentamt
European Patent Office
Office européen des brevets

(11) **EP 2 006 545 B1**

(12) **EUROPÄISCHE PATENTSCHRIFT**

(45) Veröffentlichungstag und Bekanntmachung des Hinweises auf die Patenterteilung:
**09.06.2010 Patentblatt 2010/23**

(51) Int Cl.:
*F04D 13/06* (2006.01) *F04D 15/00* (2006.01)
*H02P 29/00* (2006.01)

(21) Anmeldenummer: **07012018.3**

(22) Anmeldetag: **20.06.2007**

(54) **Verfahren zur Erfassung der Temperatur der Förderflüssigkeit einer Kreiselpumpe**

Method for recording the temperature of the carrier liquid of a rotary pump

Procédé d'enregistrement de la température du liquide d'approvisionnement d'une pompe centrifuge

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**24.12.2008 Patentblatt 2008/52**

(73) Patentinhaber: **Grundfos Management A/S**
**8850 Bjerringbro (DK)**

(72) Erfinder:
• **Kallesøe, Carsten Skovmose**
**8800 Viborg (DK)**

• **Kragh, Henrik**
**9520 Skørping (DK)**

(74) Vertreter: **Vollmann, Heiko**
**Patentanwälte Vollmann & Hemmer**
**Bei der Lohmühle 23**
**23554 Lübeck (DE)**

(56) Entgegenhaltungen:
**EP-A- 1 719 916 WO-A-03/081764**
**CH-A- 399 370 JP-A- 60 241 794**
**US-A1- 2006 038 539 US-A1- 2006 117 875**

**Beschreibung**

Bei Kreiselpumpen, insbesondere bei Heizungsumwälzpumpen kleiner und mittlerer Baugröße, zählt es zum Stand der Technik, die Pumpendrehzahl in Abhängigkeit der Temperatur der geförderten Flüssigkeit zu steuern. Dies insbesondere vor dem Hintergrund, dass auch in modernen Heizungsanlagen die Pumpensteuerung von der übrigen Heizungsanlagensteuerung, abgesehen von der Bereitstellung, Ein- und Ausschaltung der Versorgungsspannung, getrennt und unabhängig ist. Über die Temperaturerfassung der Förderflüssigkeit registriert die Pumpensteuerung den Wärmebedarf der Heizungsanlage und steuert die Pumpendrehzahl entsprechend, derart, dass bei hohem Wärmebedarf, also wenn die Förderflüssigkeit im Vorlauf eine hohe Temperatur aufweist, die Drehzahl und somit die Pumpenleistung erhöht und bei niedrigerer Temperatur abgesenkt und damit vermindert wird. Aber auch aus anderen Gründen kann es sinnvoll, zweckmäßig oder erforderlich sein, die Temperatur der Förderflüssigkeit zu erfassen. Dies erfolgt beim Stand der Technik typischerweise mittels eines Temperatursensors (vgl. die Druckschrift CH-A-399370 als nächstliegenden Stand der Technik).

Ein solcher Temperatursensor bedeutet ein zusätzliches Bauteil, wobei darüber hinaus zusätzliche Auswertelektronik erforderlich ist, die ebenfalls weitere Kosten verursacht. Darüber hinaus bedingt die Anordnung eines Temperatursensors eine potentielle Schwachstelle, da der Sensor wärmeleitend mit der Förderflüssigkeit in Verbindung gebracht werden muss.

Vor diesem Hintergrund liegt der vorliegenden Erfindung die Aufgabe zugrunde, ein Verfahren zur Erfassung der Temperatur der Förderflüssigkeit von Kreiselpumpen zu schaffen, das ohne den Einsatz eines Temperatursensors auskommt und das darüber hinaus kostengünstig und einfach handhabbar ist, d. h. mit der bei modernen Umwälzpumpen typischerweise zur Verfügung stehenden Hardware.

Diese Aufgabe wird gemäß der Erfindung durch die in Anspruch 1 angegebenen Merkmale gelöst. Bei dem erfindungsgemäßen Verfahren zur Erfassung der Temperatur der Förderflüssigkeit einer Kreiselpumpe handelt es sich um ein solches, das nach derzeitigem Kenntnisstand bei Kreiselpumpen anwendbar ist, die einen Permanentmagnetmotor aufweisen, also typischerweise Kreiselpumpen kleiner und mittlerer Baugröße. Das erfindungsgemäße Verfahren ist bestimmt für Motoren, d. h. Kreiselpumpen, bei denen der Rotor des Motors innerhalb eines förderflüssigkeitsgefüllten Spaltrohres läuft, insbesondere eines von der Förderflüssigkeit durchströmten Spaltrohres. Gemäß der Erfindung ist vorgesehen, anhand elektrischer Größen des Motors die Rotortemperatur zu ermitteln und anhand der Rotortemperatur die Temperatur des Fördermediums zu bestimmen.

Grundgedanke des erfindungsgemäßen Verfahrens und eines damit betriebenen, temperatursensorlosen Pumpenaggregats ist die Erfassung der Förderflüssigkeitstemperatur über die in der Regel ohnehin zur Verfügung stehenden elektrischen Größen des Motors. Das erfindungsgemäße Verfahren geht von der Annahme aus, dass die Rotortemperatur im Wesentlichen abhängig von der Temperatur der Förderflüssigkeit ist. Bei modernen Permanentmagnetmotoren kleiner und mittlerer Baugröße sind die im Rotor entstehenden Verluste inzwischen so gering, dass der Rotor selbst praktisch keine Verlustwärme mehr erzeugt. Die Temperatur des Rotors entspricht daher typischerweise der der Förderflüssigkeit oder ist zumindest von dieser abhängig. Diesen Effekt macht sich das erfindungsgemäße Verfahren zunutze, indem die Temperaturerfassung sensorlos rein rechnerisch über die Rotortemperaturermittlung erfolgt.

Um die Temperatur des Rotors, was besonders vorteilhaft ist, der der Förderflüssigkeit gleichsetzen zu können, ist es erforderlich, dass ein ausreichender Wärmetausch zwischen Förderflüssigkeit und Rotor erfolgt. Dies ist typischerweise bei Spaltrohrpumpen der Fall, bei welchen das Spaltrohr von Förderflüssigkeit durchströmt ist. Es hat sich jedoch in der Praxis gezeigt, dass eine Durchströmung des Spaltrohres nicht zwingend erforderlich ist, dass vielmehr ein flüssigkeitsgefülltes Spaltrohr, z. B. ein Spaltrohrtopf, ausreicht, dessen Flansch flächig mit der Förderflüssigkeit in Verbindung steht und somit eine ausreichende Wärmeleitung zwischen Förderflüssigkeit und Rotor sicherstellt.

Die erfindungsgemäße Ermittlung der Temperatur der Förderflüssigkeit erfolgt vorteilhaft mittels der Frequenzumrichterelektronik, welche dem Motor zur Drehzahlsteuerung vorgeschaltet ist. Solche Frequenzumrichter weisen typischerweise eine digitale Steuerung auf, in der die in Rede stehenden Rechenvorgänge softwaremäßig implementiert werden können. Darüber hinaus ergeben sich weitere Synergien, da in der Frequenzumrichtersteuerung alle relevanten elektrischen Größen des Motors ohnehin vorhanden oder auf einfache Art ermittelbar sind, um diesen nicht nur energetisch, sondern auch geräuschmäßig optimiert fahren zu können, wie dies zum Stand der Technik zählt. Im Bereich der Heizungsumwälzpumpen sind Pumpenaggregate bekannt, welche einen Permanentmagnetsynchronmotor aufweisen, dem ein elektronischer Frequenzumrichter vorgeschaltet ist, mit dem der Motor hochgefahren und in unterschiedlichen Betriebsdrehzahlen betreibbar ist. Bei derartigen Motoren kann also allein durch Softwareimplementierung die Temperaturermittlung der Förderflüssigkeit erfolgen, ohne dass konstruktive oder sonstige hardwaremäßige Änderungen erforderlich sind.

Die typischerweise rechnerische Ermittlung der Rotortemperatur, über welche die Temperatur der Förderflüssigkeit letztlich bestimmt wird, kann gemäß der Erfindung auf unterschiedliche Arten erfolgen. Besonders günstig ist es, die Rotortemperatur über den magnetischen Fluss des Rotors zu ermitteln. Diese stehen bekanntlich in folgender mathematischer Beziehung:

$$\text{Gleichung (1)} \qquad \lambda_m = \lambda_{m0}\left(1 + \beta_m\left(T_m - T_{m0}\right)\right),$$

wobei

$\lambda_m$ der magnetische Fluss des Rotors,

$\lambda_{m0}$ der magnetische Fluss des Rotors bei der Temperatur $T_{m0}$,

$\beta_m$ der Temperaturkoeffizient des/der Magneten und

$T_m$ die Temperatur des Rotors ist.

Löst man diese Gleichung (1) nach der Rotortemperatur auf, so ergibt sich daraus

$$\text{Gleichung (1')} \qquad T_m = \frac{\lambda_m + \left(\alpha_m T_{m0} - 1\right)\lambda_{m0}}{\beta_m \lambda_{m0}}.$$

Nach dieser Gleichung (1') kann also die Rotortemperatur in Kenntnis des Rotorflusses und der übrigen Materialkonstanten/Konstanten rechnerisch ermittelt werden.

$$\text{Gleichung (2)} \qquad \frac{v_{BEMF}}{\omega_{re}} = \lambda_m,$$

wobei

$v_{BEMF}$ die im Stator induzierte Spannung und

$\omega_{re}$ die elektrische Drehzahl des Rotors ist.

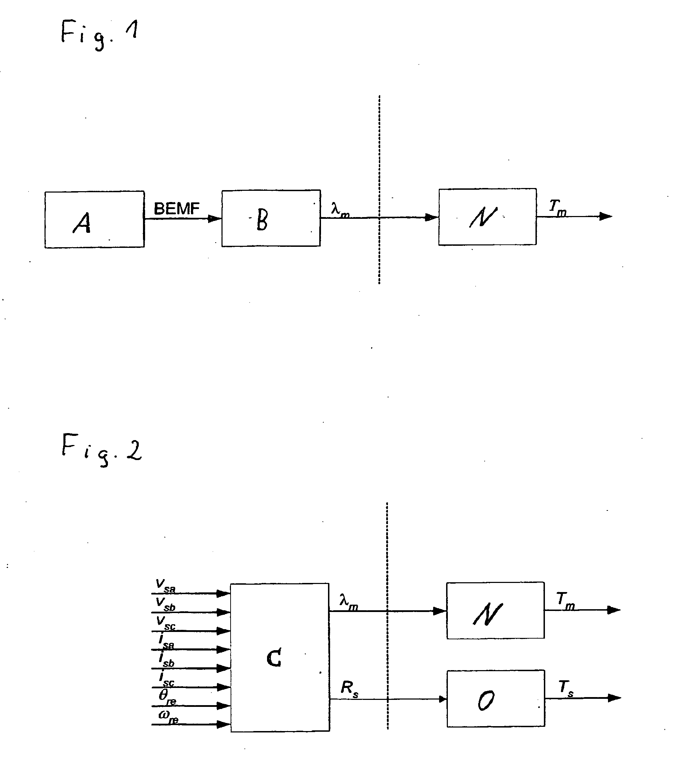

Die Bestimmung des magnetischen Flusses des Rotors kann gemäß der Erfindung auf unterschiedliche Weise erfolgen. Eine erste Methode gemäß der Erfindung ist im Blockdiagramm gemäß Figur 1 dargestellt. Dabei wird zur Erfassung des magnetischen Flusses des Rotors der Motor zunächst in Betrieb gesetzt und während des Betriebs kurzzeitig vom Versorgungsnetz getrennt, um dann die im Stator induzierte Spannung bzw. Ströme zu erfassen und darüber den magnetischen Fluss des Rotors zu ermitteln.

Gemäß Figur 1 Block A wird also zunächst der laufende Motor vom Versorgungsnetz getrennt, um nach einer gewissen Zeit, wenn die aufgrund äußerer Spannung fließenden Ströme erloschen sind, um dann bei weiter laufendem Motor zu ermitteln, welche Ströme im Stator induziert werden bzw. welche Spannungen dann am Stator anliegen. Diese sind in Figur 1 mit BEMF als Kurzbezeichnung für "back electromotive force" (gegenelektromotorische Kraft) angegeben.

Da für die Messung der Motor von der elektrischen Versorgung getrennt werden muss, muss diese Trennung möglichst kurz erfolgen, um den normalen Betrieb des Motors möglichst wenig zu stören. Da gemäß der Erfindung die induzierten Ströme im Stator vorteilhaft mindestens innerhalb einer Periode, also einer elektrischen Umdrehung des Motors ermittelt werden, muss der Motor auch mindestens so lange vom Versorgungsnetz getrennt sein.

Bei der nachfolgenden Messung ergeben sich im Wesentlichen drei Probleme, nämlich zum einen, dass die Rotorgeschwindigkeit während der Messung nicht konstant sein muss, zum anderen, dass sich harmonische Schwingungen dem Gegen-EMK überlagern und des Weiteren das der Messgenauigkeit. Denn die Spitzenwerte der gegenelektromotorischen Kraft weisen einen geringeren Wert der Spannung auf, die beim Betrieb auftritt. Darüber hinaus betragen die Unterschiede der gegenelektromotorischen Kraft bei einem Temperaturunterschied des Rotors von 100° nur etwa 20%. Die Messung muss also einerseits einen großen Messbereich umfassen, da sie auch den Spannungsspitzen im normalen Betrieb standhalten muss, andererseits aber hochgenau sein.

Gemäß einer Weiterbildung der Erfindung erfolgt dies dadurch, dass die Messung während einer vollen Periode erfolgt, also über drei Nulldurchgänge. Gemäß der Erfindung hat es sich weiterhin als besonders vorteilhaft herausgestellt, innerhalb einer solchen vollen Periode mehrere Messungen durchzuführen, vorzugsweise mehr als 10 Messungen, um dann aus den Beträgen der Messungen einen Durchschnittswert zu bilden und diesen Durchschnittswert als Spannungswert bei der weiteren Berechnung zugrundezulegen. Zuvor muss jedoch eine Transformation vorgenommen werden, die das dreiphasige System auf ein zweiphasiges umrechnet, was zum Stand der Technik zählt. Weiterhin kann anhand dieser Periode eine Durchschnittsgeschwindigkeit des Rotors bestimmt werden, um dann mit diesen Werten den magnetischen Fluss des Rotors zu berechnen. Diese statistische Auswertung der Gegen-EMF ist in Figur 1 in Block B dargestellt. Der sich daraus ergebende magnetische Fluss $\lambda_m$ des Rotors kann dann gemäß Block N in die Rotortemperatur $T_m$ gemäß Gleichung (1') umgerechnet werden.

Das vorbeschriebene erfindungsgemäße Verfahren ist auswerttechnisch vergleichsweise einfach, weist jedoch den Nachteil auf, dass der Motor, wenn auch nur für den Bruchteil einer Sekunde, so doch vom Versorgungsnetz getrennt werden muss, was in einigen Fällen unerwünscht sein kann.

Um dies zu vermeiden, ist gemäß der Erfindung in Weiterbildung des Verfahrens vorgesehen, den magnetischen Fluss des Rotors während des Betriebs des Motors zu bestimmen. Dabei sind gemäß der Erfindung zwei Lösungsansätze vorgesehen, nämlich zum einen die Ermittlung des magnetischen Flusses durch eine Parameterermittlung (parameter identification) und zum anderen mittels eines adaptiven Beobachters (adaptive observer). Eine solche Parameterermittlung ist bei Permanentsynchronmotoren an sich bekannt. Es wird in diesem Zusammenhang auf

1. Flavia Khatounian, Sandrine Moreau, Eric Monmasson, Alexandre Janot, and Francois Louveau. Simultaneous identification of the initial rotor position and electrical parameters of a PMSM for Haptic interface. EPE-PEMC 2006, Portoroz, Slovenia

2. Shinji Ichikawa, Muntuwo Tomita, Shinji Doki, and Shigeru Okuma. Sensorless control of permanent-magnet synchronous motors using online parameter identification based on system identification theory. IEEE Transactions on industrial electronics, Vol 52. No. 2. April 2006

verwiesen, wo dies im Einzelnen beschrieben ist und auf das insoweit Bezug genommen wird.

Bei der Parameterermittlung wird typischerweise ein hochfrequentes Signal der Versorgungsspannung überlagert, um dann in an sich bekannter Weise die Parameter zu ermitteln. Sobald diese Parameter ermittelt sind, ist die Beziehung zwischen diesen Parametern und der Rotortemperatur bzw. der Statortemperatur bekannt. Es kann dann neben der Rotortemperatur zusätzlich noch der Statorwiderstand gemäß folgender

$$\text{Gleichung (3)} \qquad R_s = R_{s0}\left(1 + \alpha_w\left(T_s - T_{s0}\right)\right)$$

ermittelt werden, in der

$R_{s0}$ der Statorwiderstand bei der Temperatur $T_{s0}$

$T_{s0}$ die Temperatur des Stators, wenn er einen Widerstand $R_{s0}$ aufweist,

$T_s$ die Statortemperatur und

$\alpha_w$ der Temperaturkoeffizient des Statorwiderstandes ist. Hieraus ergibt sich die

$$\text{Gleichung (3')} \qquad T_s = \frac{R_s + \left(\alpha_w T_{s0} - 1\right)R_{s0}}{\alpha_w R_{s0}},$$

welche die Statortemperatur angibt.

Das vorbeschriebene Verfahren ist anhand von Figur 2 schematisch dargestellt. Gemäß Block C werden als Eingangsgrößen die Statorspannungen $V_{sa}$, $V_{sb}$ und $V_{sc}$ sowie die Statorströme $i_{sa}$, $i_{sb}$ und $i_{sc}$, die elektrische Drehzahl $\omega_{re}$ und der elektrische Winkel zwischen Rotor und Stator $\theta_{re}$ erfasst und durch Parameterbestimmung der magnetische Fluss $\lambda_m$ und der Statorwiderstand $R_s$ bestimmt. Aus dem magnetischen Fluss des Rotors $\lambda_m$ wird dann wie schon bei der Verfahrensvariante gemäß Figur 1 in dem Block N die Rotortemperatur und damit auch die Temperatur der Förderflüssigkeit ermittelt. Darüber hinaus wird im Block O aus dem Statorwiderstand die Statortemperatur gemäß der obigen Gleichung (3') ermittelt.

Bei dem weiter oben bereits angesprochenen Verfahren, den magnetischen Fluss des Rotors durch einen adaptiven Beobachter (observer) während des Betriebs zu ermitteln, wird insbesondere auf EP 1 383 231 A1 verwiesen, wo ein solcher Beobachter (observer) beschrieben ist. Dabei werden die Ströme und Spannungen des Stators anhand eines mathematischen Motormodells nachgebildet und andererseits durch Messung ermittelt. Die so ermittelten Ströme werden miteinander verglichen und anhand des Vergleichs der magnetische Fluss des Rotors bestimmt. In EP 1 383 231 A1 wird mittels des Beobachters der magnetische Fluss, die Rotorposition und die Rotorgeschwindigkeit ermittelt. Entsprechend wird bei dem erfindungsgemäßen Verfahren mittels des Beobachters der magnetische Fluss des Rotors ermittelt, um auf diese Weise die Rotortemperatur und damit die Temperatur der Förderflüssigkeit zu ermitteln.

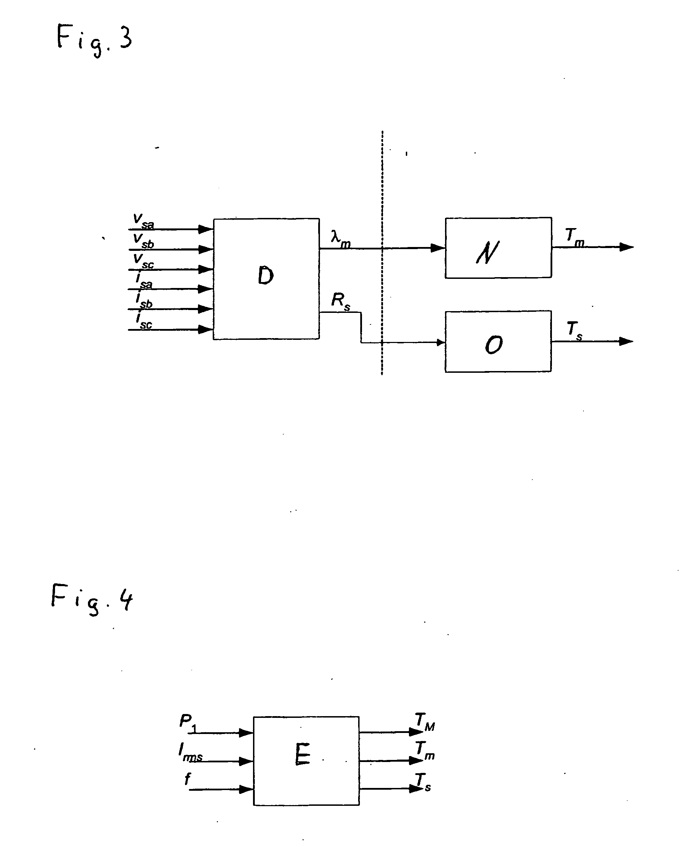

Wie dies praktisch erfolgt, ist anhand von Figur 3 dargestellt. Gemäß Block D werden die Statorspannung $V_{sa}$, $V_{sb}$ und $V_{sc}$ sowie die Statorströme $i_{sa}$, $i_{sb}$ und $i_{sc}$ erfasst und daraus mittels des Beobachters der magnetische Fluss des Rotors $\lambda_m$ sowie der Statorwiderstand $R_s$ ermittelt. Dann wird in vorbeschriebener Weise gemäß Block N anhand des Statorflusses die Statortemperatur $T_m$ sowie gemäß Block O die Rotortemperatur $T_s$ ermittelt.

Gemäß einer Weiterbildung des erfindungsgemäßen Verfahrens kann jedoch die Rotortemperatur nicht nur über die Ermittlung des magnetischen Flusses des Rotors, sondern auch über die Erstellung einer thermischen Bilanz und/oder einer Leistungsbilanz des Motors erfolgen. Dies erfolgt vorteilhaft während des Motorbetriebs, indem die vom Motor aufgenommene elektrische Leistung, der Phasenstrom, vorzugsweise dessen RMS-Wert, und die Frequenz der am Motor anliegenden Spannung ermittelt werden. Dabei wird die aufgenommene elektrische Leistung dann, wenn, was bei derartigen Permanentmagnetsynchronmotoren kleiner und mittlerer Leistung typisch ist, ein Frequenzumrichter vorgeschaltet, die aufgenommene elektrische Leistung anhand des Zwischenkreisstromes und der Zwischenkreisspannung des Frequenzumrichters ermittelt. Diese Werte stehen in der Frequenzumrichtersteuerung ohnehin zur Verfügung. Dabei kann die Temperatur des Rotors $T_m$ anhand folgender Gleichungen ermittelt werden:

$$(4) \quad \begin{aligned} T_M &= f_1(I_{rms}, T_m) \\ &= 3\lambda_{m0}(1 + \beta_m(T_m - T_{m0}))I_{rms} \end{aligned}$$

$$(5) \quad \begin{aligned} T_M &= f_2(P_1, I_{rms}, f, T_s) \\ &= \frac{P_1 - (3R_{s0}(1 + \alpha_s(T_s - T_{s0}))I_{rms}^2 + k_F f + k_{Iron} f I_{rms} + P_{l0})}{2\pi f} \end{aligned}$$

$$(6) \quad \begin{aligned} T_s &= f_3(I_{rms}, T_m) \\ &= \frac{1}{B_m} 3R_{s0}(1 + \alpha_s(T_s - T_{s0}))I_{rms}^2 + T_m \end{aligned} \quad '$$

in denen

$T_M$ -     Motormoment

$\lambda_{m0}$ -     magnetischer Fluss des Rotors bei Temperatur $T_{m0}$

$\beta_m$ -     Temperaturkoeffizient des/der Magneten

$T_{m0}$ -     Temperatur, bei der der magnetische Fluss des Rotors $\lambda_{m0}$ beträgt

$I_{rms}$ -     Effektivwert des Phasenstroms

$P_1$ -     aufgenommene Leistung des Motors

$R_{s0}$ -     Statorwiderstand bei der Temperatur $T_{s0}$

$\alpha_s$ -     Temperaturkoeffizient des Statorwiderstands

$T_s$ -     Statortemperatur

$T_{s0}$ -     Statortemperatur, bei der der Widerstand $R_{s0}$ ist

$k_F$ -     Eigenverluste des Rotors

$f$ -     Frequenz der Stromversorgung des Motors

$k_{Iron}$ -     Eisenverluste des Stators

$P_{l0}$ -     Verluste des Frequenzumrichters

$B_m$ -     Wärmeübergangswiderstand zwischen Stator und Flüssigkeit

sind.

Die Gleichung (4) stellt das Motormoment als Funktion des Effektivwerts des Statorstroms und der Rotortemperatur dar. Die Gleichung (5) stellt das Motormoment als Funktion von der aufgenommenen Leistung, dem Effektivwert des Phasenstroms, der Frequenz der am Motor anliegenden Spannung und der Statortemperatur dar. Die Gleichung (6) stellt die Statortemperatur als Funktion des Effektivwerts des Statorstroms und der Rotortemperatur dar. Aus diesen drei Gleichungen lassen sich Rotortemperatur, Statortemperatur und das Rotormoment errechnen, so wie dies in Figur 4 anhand von Block E dargestellt ist. Eingangsgrößen sind dort die aufgenommene Leistung $P_1$, der Effektivwert des Phasenstroms $I_{rms}$ und die Frequenz $f$ der am Motor anliegenden Spannung. Die konkreten Gleichungen lassen sich entsprechend abwandeln, wenn der Effektivwert des Phasenstroms durch eine andere Stromgröße ersetzt wird, die eine entsprechende Information beinhaltet.

Die Gleichungen (4), (5) und (6) stellen vereinfachte Gleichungen dar, die u. a. die Verluste durch die Umgebungstemperatur nicht berücksichtigen. Es hat sich jedoch überraschenderweise gezeigt, dass insbesondere bei Heizungsumwälzpumpen der in Rede stehenden Bauart diese Verluste vernachlässigbar sind, die ggf. jedoch auch mit berücksichtigt werden können.

Die vorbeschriebenen Verfahren sind insbesondere bei Permanentmagnetsynchronmotoren mit vorgeschalteten Frequenzumrichtern kleiner und mittlerer Leistung vorteilhaft anwendbar, jedoch ist deren Anwendung hierauf nicht beschränkt.

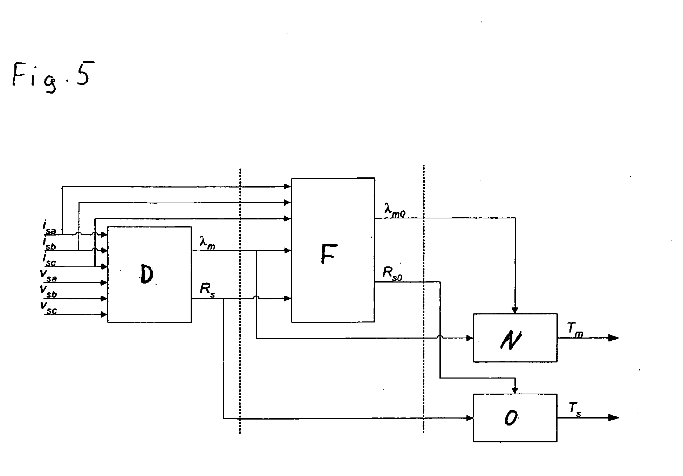

Die heute am Markt verfügbaren Magnete, die im Rotor eines solchen Motors einsetzbar sind, unterliegen hinsichtlich ihrer magnetischen Eigenschaften vergleichsweise großen Toleranzen. Wenn solche Magnete in Permanentmagnetsynchronmotoren eingesetzt werden, dann ist es gemäß einer Weiterbildung der Erfindung möglich, diese Toleranzen bei der Temperaturermittlung des Rotors zu berücksichtigen, wie dies anhand des Blockschaltbilds gemäß Figur 5 dargestellt ist. Der gemäß Block D dargestellte Beobachter entspricht dem gemäß Figur 3, könnte jedoch auch durch Parameterermittlung wie weiter oben anhand von Fig. 3, dort insbesondere Block C, beschrieben, erfolgen. Es wird also gemäß Block D bzw. C in vorbeschriebener Weise der magnetische Fluss des Rotors $\lambda_m$ sowie der Statorwiderstand $R_s$ bestimmt. Es werden dann jedoch im Unterschied zu den vorbeschriebenen Verfahren die Materialkonstanten $\lambda_{m0}$, also der magnetische Fluss des Rotors bei der Temperatur $T_{m0}$, sowie $R_{s0}$, der Statorwiderstand bei der Temperatur $T_{s0}$, ermittelt. Dies erfolgt innerhalb des Blocks F gemäß Fig. 5, und zwar mittels eines thermischen Modells und Parameterermittlung. Dabei wird der zeitliche Verlauf des magnetischen Flusses des Rotors, des Statorwiderstands und der Verluste innerhalb des Stators ermittelt, um die für die Temperaturermittlung relevanten Materialkonstanten des/der Magneten und/oder des Stators zu bestimmen, wobei letztere typischerweise auch tabellarisch erfasst werden können, da diese in der Regel keinen großen Schwankungen unterliegen.

Die Ermittlung dieser Materialkonstanten kann anhand der folgenden Gleichungen erfolgen:

$$\text{Gleichung (7)} \qquad \frac{dR_s}{dt} = -a_1 R_s + a_2 \lambda_m + a_3 + a_4 P_{loss}$$

$$\text{Gleichung (8)} \qquad P_{loss} = R_s i_{sa}^2 + R_s i_{sb}^2 + R_s i_{sc}^2$$

$$\text{Gleichung (9)} \qquad S = \frac{B_m}{a_1}$$

$$\text{Gleichung (10)} \qquad R_{s0} = a_4 \frac{S}{\alpha_s}$$

$$\text{Gleichung (11)} \qquad \lambda_{m0} = \frac{S}{\beta_m} \frac{a_1 a_4}{a_2}$$

in denen

$v_{sa}$, $v_{sb}$, $v_{sc}$ die aktuellen Spannungen der drei Phasen des Motors,
$i_{sa}$, $i_{sb}$, $i_{sc}$ die aktuellen Ströme der drei Phasen des Motors,
$\lambda_m$ der magnetische Fluss des Rotors,
$R_s$ der Statorwiderstand,
$\lambda_{m0}$ der magnetische Fluss des Rotors bei Temperatur $T_{m0}$,
$R_{s0}$ der Statorwiderstand bei der Temperatur $T_{s0}$,
$T_m$ die Temperatur des Rotors,
$T_s$ die Statortemperatur,
$P_{loss}$ die Verluste im Stator,
$a_1$, $a_2$, $a_3$, $a_4$ Konstanten sind, welche das dynamische Verhältnis zwischen Statorwiderstand, magnetischem Fluss des Rotors und Verluste innerhalb des Stators beschreiben.
$S$ die Wärmekapazität des Stators,
$B_m$ der Wärmeübergangswiderstand zwischen Stator und Flüssigkeit,
$\alpha_s$ der Temperaturkoeffizient des Statorwiderstands und
$\beta_m$ der Temperaturkoeffizient des/der Magneten

sind.

Die auf diese Weise ermittelten Konstanten $\lambda_{m0}$ und $R_{s0}$ werden dann bei der Berechnung der Rotortemperatur $T_m$ und der Statortemperatur $T_s$ gemäß den Blöcken N und O eingesetzt, wie dies auch bei den anhand der Figuren 2 und 3 vorbeschriebenen Blöcken N und O erfolgt.

**Patentansprüche**

1. Verfahren zur Erfassung der Temperatur der Förderflüssigkeit einer von einem Permanentmagnetmotor angetrieben Kreiselpumpe, dessen Rotor innerhalb eines flüssigkeitsgefüllten, insbesondere eines von Förderflüssigkeit durchströmten Spaltrohres läuft, bei dem anhand elektrischer Größen des Motors die Rotortemperatur ermittelt und anhand der Rotortemperatur die Temperatur der Förderflüssigkeit bestimmt wird.

2. Verfahren nach Anspruch 1, bei dem die Temperatur des Rotors der der Förderflüssigkeit gleichgesetzt wird.

3. Verfahren nach einem der vorhergehenden Ansprüche, bei dem der Motor von einem Frequenzumrichter angesteuert wird und die Temperaturermittlung mittels der Frequenzumrichterelektronik, insbesondere mittels der digitalen Frequenzumrichtersteuerung erfolgt.

4. Verfahren nach einem der vorhergehenden Ansprüche, bei dem zur Erfassung der Rotortemperatur der magnetische Fluss des Rotors ermittelt wird.

5. Verfahren nach Anspruch 4, bei dem zur Erfassung des magnetischen Flusses des Rotors der Motor während des Betriebs vom Versorgungsnetz getrennt und die im Stator induzierte Spannung erfasst wird.

6. Verfahren nach Anspruch 5, bei dem die im Stator induzierte Spannung mindestens innerhalb einer vollen Periode (elektrische Umdrehung des Motors) ermittelt werden.

7. Verfahren nach Anspruch 6, bei dem innerhalb einer Periode mindestens zehn Messungen erfolgen, die bei der Ermittlung des elektromagnetischen Flusses zugrunde gegelegt werden.

8. Verfahren nach Anspruch 4, bei dem die Ermittlung des magnetischen Flusses des Rotors während des Betriebs des Motors erfolgt.

9. Verfahren nach Anspruch 4 oder 8, bei dem der magnetische Fluss des Rotors durch eine Parameterermittlung während des Betriebes des Motors und dass unter Zugrundelegung der aktuellen Spannungs- und Stromwerte ermittelt wird.

10. Verfahren nach Anspruch 4 oder 8, bei dem der magnetische Fluss des Rotors durch einen Beobachter (Observer) während des Betriebes des Motors und unter Zugrundelegung der aktuellen Spannungs- und Stromwerte ermittelt wird.

11. Verfahren nach Anspruch 10, bei dem mittels des Beobachters die Motorströme in einem mathematischen Motormodell einerseits ermittelt und andererseits durch Messung ermittelt werden, bei dem die so ermittelten Ströme miteinander verglichen und anhand des Vergleichs der magnetische Fluss des Rotors ermittelt wird.

12. Verfahren nach einem der Ansprüche 9 bis 11, bei dem zusätzlich der Statorwiderstand erfasst wird.

13. Verfahren nach einem der Ansprüche 1 bis 3, bei dem während des Betriebs der Motor eine thermische Bilanz und/oder eine Leistungsbilanz des Motors erstellt und anhand der Bilanz die Rotortemperatur ermittelt wird.

14. Verfahren nach einem der Ansprüche 1 bis 3 oder 13, bei dem die Rotortemperatur während des Betriebs anhand der vom Motor aufgenommenen elektrischen Leistung, dem Phasenstrom, vorzugsweise dem Effektivwert (RMS-Wert) des Phasenstroms und anhand der Frequenz der am Motor anliegenden Spannung ermittelt wird.

15. Verfahren nach Anspruch 14, bei dem die aufgenommene elektrische Leistung anhand des Zwischenkreisstromes und der Zwischenkreisspannung des dem Motor vorgeschalteten Frequenzumrichters ermittelt wird.

16. Verfahren nach Anspruch 14, bei dem die Rotortemperatur $T_m$ anhand folgender Gleichungen ermittelt wird :

$$\begin{aligned} T_M &= f_1(I_{rms}, T_m) \\ &= 3\lambda_{m0}(1 + \beta_m(T_m - T_{m0}))I_{rms} \end{aligned} \qquad (4)$$

$$\begin{aligned} T_M &= f_2(P_1, I_{rms}, f, T_s) \\ &= \frac{P_1 - (3R_{s0}(1 + \alpha_s(T_s - T_{s0}))I_{rms}^2 + k_F f + k_{Iron} f I_{rms} + P_{I0})}{2\pi f} \end{aligned} \qquad (5)$$

$$\begin{aligned} T_s &= f_3(I_{rms}, T_m) \\ &= \frac{1}{B_m} 3R_{s0}(1 + \alpha_s(T_s - T_{s0}))I_{rms}^2 + T_m \end{aligned} \qquad (6),$$

in denen

$T_M$ - Motormoment
$\lambda_{m0}$ - magnetischer Fluss des Rotors bei Temperatur $T_{m0}$
$\beta_m$ - Temperaturkoeffizient des/der Magneten

$T_{m0}$ - Temperatur, bei der der magnetische Fluss des Rotors $\lambda_{m0}$ beträgt

$I_{rms}$ - Effektivwert des Phasenstroms

$P_1$ - aufgenommene Leistung des Motors

$R_{s0}$ - Statorwiderstand bei der Temperatur $T_{s0}$

$\alpha_s$ - Temperaturkoeffizient des Statorwiderstands

$T_s$ - Statortemperatur

$T_{s0}$ - Statortemperatur, bei der der Widerstand $R_{s0}$ ist

$k_F$ - Eigenverluste des Rotors

f - Frequenz der Stromversorgung des Motors

$k_{Iron}$ - Eisenverluste des Stators

$P_{l0}$ - Verluste des Frequenzumrichters

$B_m$ - Wärmeübergangswiderstand zwischen Stator und Flüssigkeit

sind.

**17.** Verfahren nach einem der vorhergehenden Ansprüche, bei dem die für die Temperaturermittlung relevanten Materialkonstanten des/der Magneten und/oder des Stators anhand des zeitlichen Verlaufs des magnetischen Flusses des Rotors, des Statorwiderstandes und der Verluste innerhalb des Stators ermittelt werden.

**18.** Verfahren nach Anspruch 17, bei dem die Ermittlung der Materialkonstanten anhand folgender Gleichungen erfolgt:

$$\frac{dR_s}{dt} = -a_1 R_s + a_2 \lambda_m + a_3 + a_4 P_{loss} \tag{7}$$

$$P_{loss} = R_s i_{sa}^2 + R_s i_{sb}^2 + R_s i_{sc}^2 \tag{8}$$

$$S = \frac{B_m}{a_1} \tag{9}$$

$$R_{s0} = a_4 \frac{S}{\alpha_s} \tag{10}$$

$$\lambda_{m0} = \frac{S}{\beta_m} \frac{a_1 a_4}{a_2} \tag{11}$$

in denen

$i_{sa}$, $i_{sb}$, $i_{sc}$ die aktuellen Ströme der drei Phasen des Motors,

$\lambda_m$ der magnetische Fluss des Rotors,
$R_s$ der Statorwiderstand,
$\lambda_{m0}$ der magnetische Fluss des Rotors bei Temperatur $T_{m0}$,
$R_{s0}$ der Statorwiderstand bei der Temperatur $T_{s0}$,
$T_m$ die Temperatur des Rotors,
$T_s$ die Statortemperatur,
$P_{loss}$ die Verluste im Stator,
$\alpha_1, \alpha_2, \alpha_3, \alpha_4$ Konstanten sind, welche das dynamische Verhältnis zwischen Statorwiderstand, magnetischem Fluss des Rotors und Verluste innerhalb des Stators beschreiben.
$S$ die Wärmekapazität des Stators,
$B_m$ der Wärmeübergangswiderstand zwischen Stator und Flüssigkeit,
$\alpha_s$ der Temperaturkoeffizient des Statorwiderstands und
$\beta_m$ der Temperaturkoeffizient des/der Magneten
sind.

## Claims

1. A method for detecting the temperature of the delivery fluid of a centrifugal pump driven by a permanent magnet motor, whose rotor runs within a fluid-filled can, in particular a can through which the delivery fluid flows, with which the rotor temperature is determined by way of electrical variables of the motor, and the temperature of the delivery fluid is determined by way of the rotor temperature.

2. A method according to claim 1, with which the temperature of the rotor is equated to that of the delivery fluid.

3. A method according to one of the preceding claims, with which the motor is activated by a frequency converter and the temperature evaluation is effected by way of the frequency converter electronics, in particular by way of the digital frequency converter control.

4. A method according to one of the preceding claims, with which the magnetic flux of the rotor is determined for detecting the rotor temperature.

5. A method according to claim 4, with which the motor is disconnected from the supply mains during operation and the voltage induced in the stator is detected, for detecting the magnetic flux of the rotor.

6. A method according to claim 5, with which the voltage induced in the stator is determined at least within one complete period (electrical revolution of the motor).

7. A method according to claim 6, with which at least ten measurements are effected within one period, which are taken as a basis when determining the electromagnetic flux.

8. A method according to claim 4, with which the determining of the magnetic flux of the rotor is effected during operation of the motor.

9. A method according to claim 4 or 8, with which the magnetic flux of the rotor is determined by way of determining parameters during the operation of the motor and that one determines on the basis of the prevailing voltage values and current values.

10. A method according to claim 4 or 8, with which the magnetic flux of the rotor is determined by an observer during the operation of the motor and on the basis of the prevailing voltage values and current values.

11. A method according to claim 10, with which, by way of the observer, the motor currents on the one hand are determined in a mathematic model and on the other hand by way of measurement, with which the thus evaluated currents are compared to one another and the magnetic flux of the rotor is determined by way of the comparison.

12. A method according to one of the claims 9 to 11, with which the stator resistance is additionally detected.

13. A method according to one of the claims 1 to 3, with which a thermal balance and/or a power balance of the motor is created during the operation of the motor, and the rotor temperature is determined by way of the balance.

14. A method according to one of the claims 1 to 3 or 13, with which the rotor temperature during the operation is determined by way of the electrical power taken up by the motor, the phase current, preferably the effective value (RMS value) of the phase current, and by way of the frequency of the voltage present at the motor.

15. A method according to claim 14, with which the taken-up power is determined by way of the intermediate circuit current and the intermediate circuit voltage of the frequency converter connected in series in front of the motor.

16. A method according to claim 14, with which the rotor temperature $T_m$ is determined by way of the following equations:

$$
\begin{aligned}
T_M &= f_1(I_{rms}, T_m) \\
&= 3\lambda_{m0}(1 + \beta_m(T_m - T_{m0}))I_{rms}
\end{aligned} \tag{4}
$$

$$
\begin{aligned}
T_M &= f_2(P_1, I_{rms}, f, T_s) \\
&= \frac{P_1 - (3R_{s0}(1 + \alpha_s(T_s - T_{s0}))I_{rms}^2 + k_F f + k_{Iron} f I_{rms} + P_{l0})}{2\pi f}
\end{aligned} \tag{5}
$$

$$
\begin{aligned}
T_s &= f_3(I_{rms}, T_m) \\
&= \frac{1}{B_m}3R_{s0}(1 + \alpha_s(T_s - T_{s0}))I_{rms}^2 + T_m
\end{aligned} \tag{6,}
$$

in which

$T_M$ - is the motor torque
$\lambda_{m0}$ - magnetic flux of the rotor at temperature $T_{m0}$
$\beta_m$ - temperature coefficient of the magnet/magnets
$T_{m0}$ - temperature, at which the magnetic flux of the rotor is $\lambda_{m0}$
$I_{rms}$ - effective value of the phase current
$P_1$ - power taken up by the motor
$R_{s0}$ - stator resistance at the temperature $T_{s0}$
$\alpha_s$ - temperature coefficient of the stator resistance
$T_s$ - stator temperature
$T_{s0}$ - stator temperature, at which the resistance is $R_{s0}$
$k_F$ - intrinsic losses of the rotor
f - frequency of the electricity supply of the motor
$k_{Iron}$ - iron losses of the stator
$P_{l0}$ - losses of the frequency converter
$B_m$ - heat transition resistance between the stator and fluid.

17. A method according to one of the preceding claims, with which the material constants of the magnet/magnets and/or of the stator, which are of relevance for determining the temperature, are determined by way of the temporal course of the magnetic flux of the rotor, of the stator resistance and of the losses within the stator

**18.** A method according to claim 17, with which the evaluation of the material constants is effected by way of the following equations

$$\frac{dR_s}{dt} = -a_1 R_s + a_2 \lambda_m + a_3 + a_4 P_{loss} \tag{7}$$

$$P_{loss} = R_s i_{sa}^2 + R_s i_{sb}^2 + R_s i_{sc}^2 \tag{8}$$

$$S = \frac{B_m}{a_1} \tag{9}$$

$$R_{s0} = a_4 \frac{S}{\alpha_s} \tag{10}$$

$$\lambda_{m0} = \frac{S}{\beta_m} \frac{a_1 a_4}{a_2} \tag{11}$$

in which

$i_{sa}$, $i_{sb}$, $i_{sc}$ are the prevailing currents of the three phases of the motor,

$\lambda_m$ the magnetic flux of the rotor,

$R_s$ the stator resistance,

$\lambda_{m0}$ the magnetic flux of the rotor at temperature $T_{m0}$,

$R_{s0}$ the stator resistance at temperature $T_{s0}$,

$T_m$ the temperature of the rotor,

$T_s$ the stator temperature,

$P_{loss}$ the losses in the stator,

$a_1$, $a_2$, $a_3$, $a_4$ are constants, which describe the dynamic relation between the stator resistance, magnetic flux of the rotor and the losses within the stator,

S the heat capacity of the stator,

$B_m$ the heat transition resistance between the stator and the fluid,

$\alpha_s$ the temperature coefficient of the stator resistance and

$\beta_m$ the temperature coefficient of the magnet/magnets.

**Revendications**

1. Procédé de détection de la température du fluide de déplacement d'une pompe centrifuge entraînée par un moteur à aimant permanent, dont le rotor tourne à l'intérieur d'une gaine de moteur remplie d'un fluide, en particulier parcourue par un fluide de déplacement, dans lequel on détermine la température du rotor au moyen de grandeurs électriques du moteur, et on détermine la température du fluide de déplacement au moyen de la température du rotor.

2. Procédé selon la revendication 1, dans lequel la température du rotor égale celle du fluide de déplacement.

3. Procédé selon l'une des revendications précédentes, dans lequel le moteur est commandé par un convertisseur de fréquence, et la détermination de la température s'effectue au moyen de l'électronique du convertisseur de fréquence, en particulier au moyen de la commande numérique du convertisseur de fréquence.

4. Procédé selon l'une des revendications précédentes, dans lequel, pour déterminer la température du rotor, on détermine le flux magnétique du rotor.

5. Procédé selon la revendication 4, dans lequel, pour détecter le flux magnétique du rotor, le moteur est séparé du réseau d'alimentation pendant le fonctionnement et la tension induite dans le stator est détectée.

6. Procédé selon la revendication 5, dans lequel la tension induite dans le stator est déterminée au moins à l'intérieur d'une période complète (rotation électrique du moteur).

7. Procédé selon la revendication 6, dans lequel, à l'intérieur d'une période, sont réalisées au moins dix mesures qui sont prises comme base dans la détermination du flux électromagnétique.

8. Procédé selon la revendication 4, dans lequel la détermination du flux magnétique du rotor se fait pendant le fonctionnement du moteur.

9. Procédé selon la revendication 4 ou 8, dans lequel le flux magnétique du rotor est déterminé par une détermination de paramètres pendant le fonctionnement du moteur, et en prenant comme base les valeurs réelles de tension et de courant.

10. Procédé selon la revendication 4 ou 8, dans lequel le flux magnétique du rotor est déterminé par un observateur pendant le fonctionnement du moteur, et en prenant comme base les valeurs réelles de tension et de courant.

11. Procédé selon la revendication 10, dans lequel, au moyen de l'observateur, les courants du moteur sont déterminés d'une part dans un modèle mathématique du moteur et d'autre part par une mesure, les courants ainsi déterminés étant comparés entre eux et le flux magnétique du rotor étant déterminé au moyen de la comparaison.

12. Procédé selon l'une des revendications 9 à 11, dans lequel on détecte, en outre, la résistance du stator.

13. Procédé selon l'une des revendications 1 à 3, dans lequel, pendant le fonctionnement du moteur, on élabore un bilan thermique et/ou un bilan de puissance du moteur, et on détermine la température du rotor au moyen du bilan.

14. Procédé selon l'une des revendications 1 à 3 ou 13, dans lequel la température du rotor est déterminée pendant le fonctionnement au moyen de la puissance électrique absorbée par le moteur, du courant de phase, de préférence de la valeur efficace (valeur RMS) du courant de phase, et au moyen de la fréquence de la tension au niveau du moteur.

15. Procédé selon la revendication 14, dans lequel la puissance électrique absorbée est déterminée au moyen du courant de circuit intermédiaire et de la tension de circuit intermédiaire du convertisseur de fréquence monté en amont du moteur.

16. Procédé selon la revendication 14, dans lequel la température du rotor $T_m$ est déterminée au moyen des équations suivantes :

$$T_M = f_1(I_{rms}, T_m)$$
$$= 3\lambda_{m0}(1 + \beta_m(T_m - T_{m0}))I_{rms} \tag{4}$$

$$T_M = f_2(P_1, I_{rms}, f, T_s)$$
$$= \frac{P_1 - (3R_{s0}(1 + \alpha_s(T_s - T_{s0}))I_{rms}^2 + k_F f + k_{Iron} fI_{rms} + P_{t0})}{2\pi f} \tag{5}$$

$$T_s = f_3(I_{rms}, T_m)$$
$$= \frac{1}{B_m} 3R_{s0}(1 + \alpha_s(T_s - T_{s0}))I_{rms}^2 + T_m \tag{6}.$$

dans lesquelles sont

$T_m$ Couple moteur
$\lambda_{m0}$ Flux magnétique du rotor à la température $T_{m0}$
$\beta_m$ Coefficient de température du/des aimant(s)
$T_{m0}$ Température à laquelle le flux magnétique du rotor est $A_{m0}$.
$I_{rms}$ Valeur efficace du courant de phase
$P_1$ Puissance absorbée du moteur
$R_{s0}$ Résistance du stator à la température $T_{s0}$
$a_s$ Coefficient de température de la résistance du stator
$T_S$ Température du stator
$T_{s0}$ Température du stator à laquelle la résistance est $R_{s0}$
$k_F$ Pertes internes du rotor
$f$ Fréquence de l'alimentation en courant du moteur
$k_{iron}$ Pertes internes du stator
$P_{t0}$ Pertes du convertisseur de fréquence
$B_m$ Résistance à la transmission de chaleur entre le stator et le fluide.

**17.** Procédé selon l'une des revendications précédentes, dans lequel les constantes propres aux matières du/des aimant(s) et/ou du stator, pertinentes pour la détermination de la température, sont déterminées au moyen de l'évolution temporelle du flux magnétique du rotor, de la résistance du stator et des pertes dans le stator.

**18.** Procédé selon la revendication 17, dans lequel la détermination des constantes propres aux matières se fait au moyen des équations suivantes :

$$\frac{dR_s}{dt} = -a_1 R_s + a_2 \lambda_m + a_3 + a_4 P_{loss} \tag{7}$$

$$P_{loss} = R_s i_{sa}^2 + R_s i_{sb}^2 + R_s i_{sc}^2 \qquad (8)$$

$$S = \frac{B_m}{a_1} \qquad (9)$$

$$R_{s0} = a_4 \frac{S}{\alpha_s} \qquad (10)$$

$$\lambda_{m0} = \frac{S}{\beta_m} \frac{a_1 a_4}{a_2} \qquad (11)$$

dans lesquelles

$I_{sa}$, $i_{sb}$, $i_{sc}$ sont les courants réels des trois phases du moteur,

$\lambda_m$ Flux magnétique du rotor,
$R_s$ Résistance du stator,
$\lambda_{m0}$ Flux magnétique du rotor à la température $T_{m0}$,
$R_{s0}$ Résistance du stator à la température $T_{s0}$,
$T_m$ Température du rotor,
$T_s$ Température du stator,
$P_{loss}$ Pertes dans le stator,
$a_1$, $a_2$, $a_3$, $a_4$ sont des constantes qui décrivent le rapport dynamique entre la résistance du stator, le flux magnétique du rotor et les pertes dans le stator,
$S$ Capacité thermique du stator,
$B_m$ Résistance à la transmission de chaleur entre le stator et le fluide,
$a_s$ Coefficient de température de la résistance du stator, et
$\beta_m$ Coefficient de température du/des aimants.

Fig. 1

$$A \xrightarrow{\text{BEMF}} B \xrightarrow{\lambda_m} \quad N \xrightarrow{T_m}$$

Fig. 2

$$\begin{array}{c} v_{sa} \\ v_{sb} \\ v_{sc} \\ i_{sa} \\ i_{sb} \\ i_{sc} \\ \theta_{re} \\ \omega_{re} \end{array} \longrightarrow C \xrightarrow{\lambda_m} \quad N \xrightarrow{T_m}$$

$$C \xrightarrow{R_s} \quad O \xrightarrow{T_s}$$

Fig. 3

$v_{sa}$ →
$v_{sb}$ →
$v_{sc}$ →
$i_{sa}$ →
$i_{sb}$ →
$i_{sc}$ →

[D] — $\lambda_m$ → [N] — $T_m$ →

$R_s$ — [O] — $T_s$ →

Fig. 4

$P_1$ →
$I_{rms}$ →
$f$ →

[E] — $T_M$ →
— $T_m$ →
— $T_s$ →

Fig.5

**EP 2 006 545 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 399370 A
- EP 1383231 A1

**In der Beschreibung aufgeführte Nicht-Patentliteratur**

- **FLAVIA KHATOUNIAN ; SANDRINE MOREAU ; ERIC MONMASSON ; ALEXANDRE JANOT ; FRANCOIS LOUVEAU.** Simultaneous identification of the initial rotor position and electrical parameters of a PMSM for Haptic interface. *EPE-PEMC,* 2006

- **SHINJI ICHIKAWA ; MUNTUWO TOMITA ; SHINJI DOKI ; SHIGERU OKUMA.** Sensorless control of permanent-magnet synchronous motors using online parameter identification based on system identification theory. *IEEE Transactions on industrial electronics,* April 2006, vol. 52 (2